# EUROPEAN PATENT SPECIFICATION

(11) **EP 4 582 231 B1**
(45) Date of publication and mention of the grant of the patent: **02.09.2026**
(21) Application number: 24205335.3
(22) Date of filing: 08.10.2024
(51) Int. Cl.: B26F 1/38, B26D 7/27, B65B 61/02, H05K 5/03

(54) **CUTTING AND ATTACHING SYSTEM FOR SCREEN PROTECTOR HAVING HIGH HARDNESS**
SCHNEID- UND BEFESTIGUNGSSYSTEM FÜR EINEN SCHIRMSCHUTZ MIT HOHER HÄRTE
SYSTÈME DE COUPE ET DE FIXATION POUR PROTECTEUR DE TAMIS PRÉSENTANT UNE DURETÉ ÉLEVÉE

(30) Priority: 05.01.2024 US 202463617876 P
(43) Date of publication of application: 09.07.2025
(60) Divisional application: 26178577.8 / 4 770 288; 26183330.5 / 4 783 756; 26194273.4
(73) Proprietor: Lin, Chia-Ching, Taipei City 104 (TW)
(72) Inventor: Lin, Chia-Ching, 104 Taipei City (TW)
(74) Representative: karo IP

(56) References cited:
- CN-A- 104 325 725
- CN-A- 112 123 384
- CN-B- 103 448 943
- CN-U- 204 196 395
- CN-U- 208 880 793
- US-A1- 2024 100 817

## Description

The present invention relates to a screen protector and a cutter, and more particularly to a cutting and attaching system that is provided for a screen protector having a high hardness and that is suitable to cut a universal sheet having at least 5H hardness.

A conventional cutter is provided only for cutting a soft screen protector having a hardness less than 3H, thereby enabling the soft screen protector to form a shape that fits on any mobile apparatus. However, a hardened screen protector having a hardness greater than or equal to 5H is difficult to be cut for meeting shape or quality of a mobile apparatus through a conventional cutting manner (e.g., the hardened screen protector can easily have burrs or a scratchy structure after being cut). Accordingly, for manufacturers that provide screen protectors to attach onto any mobile apparatus, the hardened screen protectors can only be inventoried in various shapes and sizes in order to fit different mobile apparatuses, which not only greatly increases inventory costs, but also makes it difficult to meet screen protector requirements of less common brands of mobile apparatuses.

CN112123384A discloses a kiss-cut broach. A cutter blade for use in a cutting tool of a cutting machine designed and precisely arranged to kiss cut a sticker adhered to a sticker backing, the backing including a backing layer and a de-adhesive layer, the sticker including a cover layer and an adhesive layer, the adhesive layer releasably adhered to the de-adhesive layer, the cutter arranged for use within the scope of an automatic kiss cut cutting mode in which a blade is guided by the cutting machine in a cutting direction along the sticker to completely cut through the sticker without cutting through or only partially cutting through the backing, the cutter comprising: the cutting tool comprises a holding section for inserting a knife into a knife holder of the cutting tool, a longitudinal axis arranged at right angles to the cutting direction, a blade having a cutting edge and a back, the cutting edge forming a first angle of less than 90 ° with the cutting direction when viewed in a plane defined by the cutting direction and the longitudinal axis, an intermediate region between the cutting edge and the back enclosing a second angle of between 130 ° and 170 ° with the cutting direction when also viewed in said plane.

CN104325725A discloses a sectional laminated type screen protective film, a production process and a production line thereof. The sectional laminated type screen protective film at least comprises a first peeling film and a screen-protective-film main film, wherein the first peeling film is provided with at least one dividing line, i.e., the first peeling film is at least divided into at least two surface areas by the dividing line. The sectional laminated type screen protective film, the production process and the production line have the advantages that since the dividing line is arranged on the first peeling film at the bottom layer, i.e., the first peeling film is pre-divided into several sections, when the film is laminated, the whole film laminating speed is accelerated, and the screen-protective-film main films in other surface areas are prevented from being exposed in the air for a long time, so that the probability of adhesion of pollutants such as small dust is reduced, the probability for generation of bubbles after the film is laminated is reduced, further the film lamination is tighter, the use and protective effects are better and the service life is longer.

CN208880793U discloses a kind of portable screen protective film guillotines; including shell; platform is cut positioned at the shell is intracorporal; it is fixed on the fixed idler whell cut above platform; the axis of rolling positioned at the fixed idler whell rear; the guide rail for being parallel to the axis of rolling and being located above the axis of rolling, the driver being slidably arranged on the guide rail and the mechanical cutter head that driver side is set. The platform two sides that cut are equipped with limit card slot.By adopting the above technical scheme, it due to replacing laser using mechanical cutter head, solves the jaundice of screen protecting film caused by laser high temperature, black, the spoilage problems of deformation ; Meanwhile the section of mechanical cutter head cutting is more smooth, film layer does not bond and easily separated at section ; Any poisonous and hazardous gas or light are not generated in cutting process, it is safer, more environmentally friendly.It is small in size, light-weight, it is easy to carry, it occupies little space ; Structure is simple, good reliability, and for ease of maintenaince.

CN204196395U discloses a production line of a sectional attaching screen protection film, which comprises a first attaching machine, a first die-cutting machine, a second attaching machine and a second die-cutting machine which are arranged in sequence, wherein the first die-cutting machine is provided with a first die-cutting edge consisting of two parallel blades; the second die-cutting machine is provided with a second film cutting edge and a third die-cutting edge which are rectangular and closed, wherein the second die-cutting blade is positioned on the periphery, the third die-cutting blade is positioned on the inner periphery, and the depth of the blade point of the second die-cutting blade is greater than that of the blade point of the third die-cutting blade. Adopt the utility model discloses the screen protection film of production line production sets up the cut-off rule at the first stripping film of its bottom, is about to first stripping film and divides into several sections in advance, and this speed that just can accelerate whole pad pasting avoids the screen protection film main membrane of other face territories as far as possible to expose in the air for a long time to reduce the probability of filths such as the little dust of adhesion, reduce the probability of gassing behind the pad pasting, make the pad pasting inseparabler, life is longer.

In response to the above-referenced technical inadequacies, the present invention provides a cutting and attaching system for a screen protector having a high hardness for effectively improving on the issues associated with conventional cutting manners according to independent claim 1. The dependent claims show further embodiments of claim 1.

In order to solve the above-mentioned problems, one of the technical aspects adopted by the present invention is to provide a cutting and attaching system for a screen protector having a high hardness, which includes a cutting apparatus, a universal sheet, and a film applicator. The cutting apparatus includes a carrying machine, a displacement mechanism, a processing module, and a cutter. The displacement mechanism is assembled to the carrying machine and is movable relative to the carrying machine. The processing module is assembled to the carrying machine. The processing module is electrically coupled to the displacement mechanism and is configured to move the displacement mechanism along a hole cutting path and a screen cutting path that is different from the hole cutting path. The screen cutting path corresponds to a contour of a screen of a mobile apparatus. The cutter is assembled to the displacement mechanism. The cutter defines a transversal reference plane and a longitudinal plane that is perpendicular to transversal reference plane, and the transversal reference plane is perpendicular to a longitudinal direction of the cutter. The cutter includes a supporting segment and a cutting segment that is connected to the supporting segment. The cutting segment has a first lateral surface, a second lateral surface corresponding to the first lateral surface, a secondary bevel connected to the first lateral surface, and a primary bevel that is connected to the second lateral surface and the secondary bevel. Moreover, a connection edge of the primary bevel and the secondary bevel is defined as a primary cutting edge that is arranged on the longitudinal reference plane. The first lateral surface and the longitudinal reference plane have a slanting angle therebetween that is within a range from 1 degree to 3 degrees, and the primary cutting edge and the transversal reference plane have a first angle therebetween that is within a range from 43 degrees to 47 degrees. The primary cutting edge has a first height along the longitudinal direction, the first height being within a range from 0.98 mm to 1.08 mm. The cutting apparatus being configured to cut and apply the universal sheet, which is configured to be cut to form a screen protector through a cutting process of the cutting apparatus, such universal sheet including a usage layer, a buffer layer, and a bottom layer. The usage layer includes a hardened film and a bonding film that is formed on the hardened film, and a hardness of the hardened film is at least 5H. The buffer layer includes a first buffer film attached onto the hardened film and a second buffer film that is attached onto the first buffer film. Moreover, a hardness of the hardened film, a hardness of the first buffer film, and a hardness of the second buffer film sequentially decrease, and a thickness of the hardened film, a thickness of the first buffer film, and a thickness of the second buffer film sequentially decrease. The bottom layer is attached onto the bonding film. When in use the universal sheet is placed on the cutting apparatus under the cutting process, the bottom layer of the universal sheet is fixed to the carrying machine, the displacement mechanism is driven by the processing module to enable the primary cutting edge of the cutter to cut the buffer layer and the usage layer along the hole cutting path for forming a positioning contour that has a plurality of positioning holes, and then along the screen cutting path for forming a screen contour that is located inside of the positioning contour, such that the buffer layer and the usage layer jointly define a screen region and a positioning region that surrounds the screen region and that has the positioning holes. The film applicator is located at a downstream of the cutting apparatus and includes an accommodating chamber configured to hold the mobile apparatus and a plurality of positioning pillars that is arranged on two opposite sides of the accommodating chamber. Moreover, a relative position of the positioning pillars is identical to a relative position of the positioning holes of the positioning contour, and a relative position between the positioning pillars and the screen of the mobile apparatus is identical to a relative position between the positioning holes and the screen contour. The cutting and attaching system is configured such that in use the accommodating chamber of the film applicator holds the mobile apparatus and the positioning holes of the positioning region are respectively sleeved at the positioning pillars, the screen region faces toward the screen of the mobile apparatus for allowing the screen region to be pressed onto the screen.

In one of the possible or preferred embodiments, the primary cutting edge has a tip arranged away from the supporting segment and a top end that is arranged adjacent to the supporting segment, the primary bevel has a bottom side connected to the tip and a top side that is connected to the top end, and the first lateral surface and the second lateral surface are spaced apart from each other. The cutting segment has a first end surface and a second end surface. The first end surface is connected to the first lateral surface, the second lateral surface, and the bottom side of the primary bevel so as to jointly form the tip. The second end surface is connected to the first lateral surface, the second lateral surface, and the top side of the primary bevel so as to jointly form the top end.

In one of the possible or preferred embodiments, the first end surface has a secondary cutting edge that extends from the tip and that has a second height along the longitudinal direction, and the second height is within a range from 4 µm to 6 µm.

In one of the possible or preferred embodiments, the secondary bevel has an elongated shape being parallel to the primary cutting edge, a width of the secondary bevel is within a range from 0.01 mm to 0.03 mm, and an area of the primary bevel is at least 5 times an area of the secondary bevel.

In one of the possible or preferred embodiments, a bottom side of the primary bevel has a height along the longitudinal direction, the height being within a range from 0.73 mm to 0.77 mm. The supporting segment defines a central axis parallel to the longitudinal direction, and a distance between the first lateral surface and the central axis is less than a distance between the second lateral surface and the central axis. The second lateral surface and the transversal reference plane have a second angle therebetween that is within a range from 91 degrees to 91.5 degrees.

In one of the possible or preferred embodiments, the cutting segment is integrally connected to the supporting segment, the cutter includes an assembling segment, and the supporting segment is soldered onto the assembling segment.

In one of the possible or preferred embodiments, the cutting apparatus is suitable for a certain type of the universal sheet that has an identification code arranged on the buffer layer, and the cutting apparatus further includes a scanner that is assembled to the carrying machine and that is electrically coupled to the processing module. The cutting and attaching system includes a cloud server that is electrically coupled to the processing module and the scanner. When in use the universal sheet is fixed onto the carrying machine, the scanner is configured to scan the identification code to generate a signal, such that the cloud server is configured to receive the signal through the processing module for allowing the cutting apparatus to perform the cutting process.

In one of the possible or preferred embodiments, the cutting and attaching system is prepared to cut and apply a sheet, the thickness of the second buffer film is within a range from 40% to 90% of the thickness of the first buffer film, and the thickness of the first buffer film is within a range from 60% to 75% of the thickness of the hardened film.

In one of the possible or preferred embodiments, the cutting and attaching system is prepared to cut and apply a sheet, a sum of the thickness of the first buffer film and the thickness of the second buffer film is within a range from 60% to 105% of a thickness of the bonding film, and the thickness of the hardened film is within a range from 55% to 90% of the thickness of the bonding film.

In one of the possible or preferred embodiments, the supporting segment has a surrounding surface having a circular shape, the first lateral surface is a planar lateral surface, and the second lateral surface is a curved lateral surface that is flush with the surrounding surface of the supporting segment.

Therefore, the cutting and attaching system in the present invention is operated through the cooperation of the cutting apparatus, the universal sheet, and the film applicator, so that the cutting apparatus can perform the cutting process to the universal sheet having at least 5H hardness according to the film applicator and the mobile apparatus, thereby forming the screen protector that is suitable to be applied to the film applicator and the mobile apparatus and that has no burrs and no scratchy structure. Accordingly, the cutting and attaching system can be used to implement a customized film attaching requirement by cutting the universal sheet until attaching the screen protector onto the mobile apparatus.

Moreover, the cutting and attaching system in the present invention is provided with the cutting segment having the specific features (e.g., a scope of the slanting angle, the arrangement of the secondary bevel, the first angle corresponding to the primary cutting edge and being within a range from 43 degrees to 47 degrees, and the first height of the primary cutting edge being within a range from 0.98 mm to 1.08 mm), thereby facilitating the cutting of the universal sheet (or the hardened film) that has at least 5H hardness.

These and other aspects of the present invention will become apparent from the following description of the embodiment taken in conjunction with the following drawings and their captions, although variations and modifications therein may be affected without departing from the scope of the novel concepts of the invention.

The described embodiments may be better understood by reference to the following description and the accompanying drawings, in which:
FIG. 1 is a schematic view of a cutting and attaching system for a screen protector having a high hardness according to a first embodiment of the present invention;
FIG. 2 is a schematic perspective view of a cutter of the cutting and attaching system according to the first embodiment of the present invention;
FIG. 3 is a schematic perspective view of FIG. 2 from another angle of view;
FIG. 4 is a schematic front view of FIG. 2;
FIG. 5 is a schematic side view of FIG. 2;
FIG. 6 is a schematic front view of FIG. 3;
FIG. 7 is a schematic enlarged view of part VII of FIG. 6;
FIG. 8 is a schematic view showing the cutter of FIG. 1 that cuts a universal sheet along a hole cutting path;
FIG. 9 is schematic view showing the cutter of FIG. 1 that cuts the universal sheet along a screen cutting path;
FIG. 10 is a schematic view showing the cutting and attaching system that performs an attaching process;
FIG. 11 is a schematic view showing an operation following that of FIG. 10;
FIG. 12 is a schematic view showing a following operation of FIG. 11;
FIG. 13 is a schematic view showing a following operation of FIG. 12;
FIG. 14 is a schematic perspective view of the cutter according to a second embodiment of the present invention;
FIG. 15 is a schematic perspective view of the cutter having another configuration according to the second embodiment of the present invention;
FIG. 16 is a schematic perspective view of FIG. 15 from another angle of view;
FIG. 17 is a schematic front view of FIG. 15;
FIG. 18 is a schematic side view of FIG. 15; and
FIG. 19 is a schematic front view of FIG. 16.

The present invention is more particularly described in the following examples that are intended as illustrative only since numerous modifications and variations therein will be apparent to those skilled in the art. Like numbers in the drawings indicate like components throughout the views. As used in the description herein and throughout the claims that follow, unless the context clearly dictates otherwise, the meaning of "a," "an" and "the" includes plural reference, and the meaning of "in" includes "in" and "on." Titles or subtitles can be used herein for the convenience of a reader, which shall have no influence on the scope of the present invention.

The terms used herein generally have their ordinary meanings in the art. In the case of conflict, the present document, including any definitions given herein, will prevail. The same thing can be expressed in more than one way. Alternative language and synonyms can be used for any term(s) discussed herein, and no special significance is to be placed upon whether a term is elaborated or discussed herein. A recital of one or more synonyms does not exclude the use of other synonyms. The use of examples anywhere in this specification including examples of any terms is illustrative only, and in no way limits the scope and meaning of the present invention or of any exemplified term. Likewise, the present invention is not limited to various embodiments given herein. Numbering terms such as "first," "second" or "third" can be used to describe various components, signals or the like, which are for distinguishing one component/signal from another one only, and are not intended to, nor should be construed to impose any substantive limitations on the components, signals or the like.

### [First Embodiment]

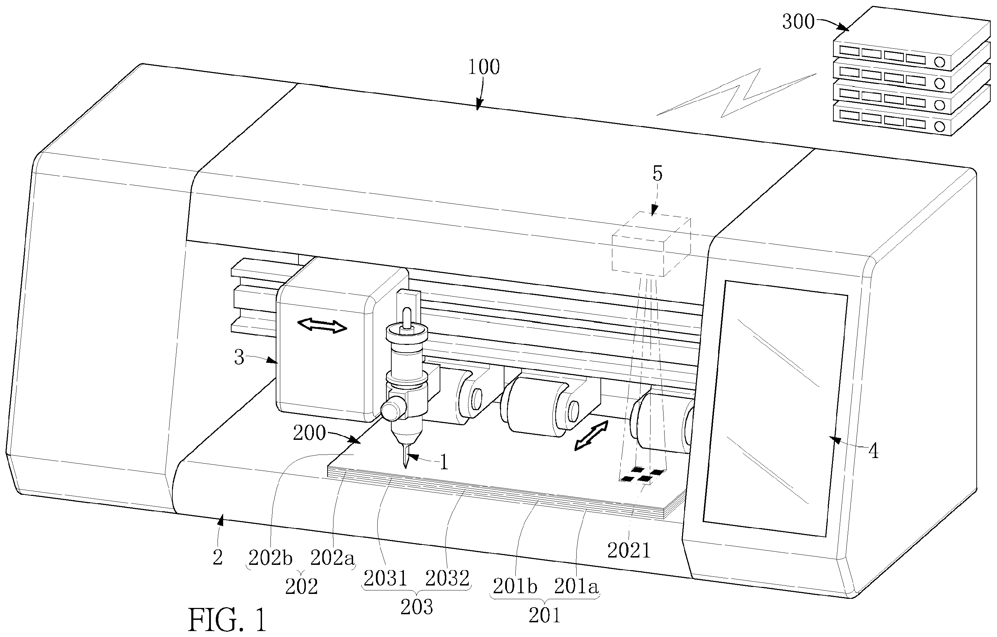

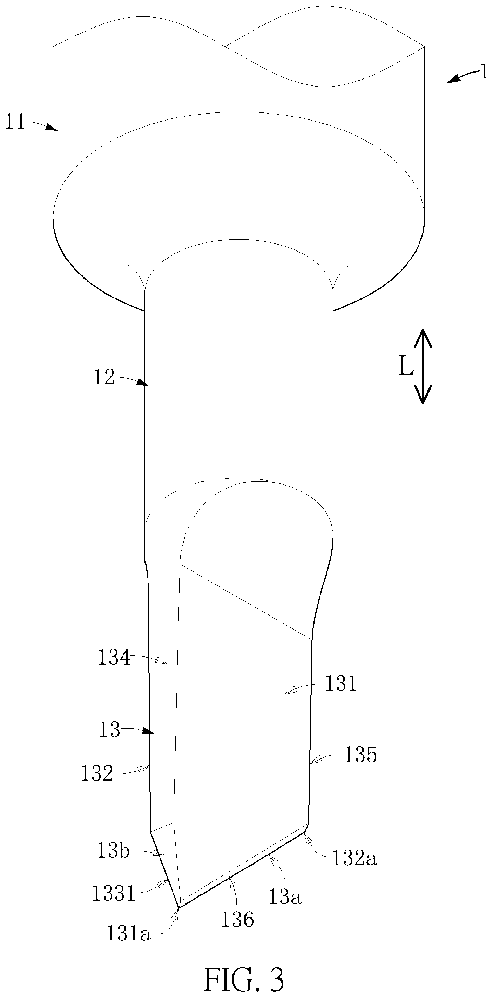

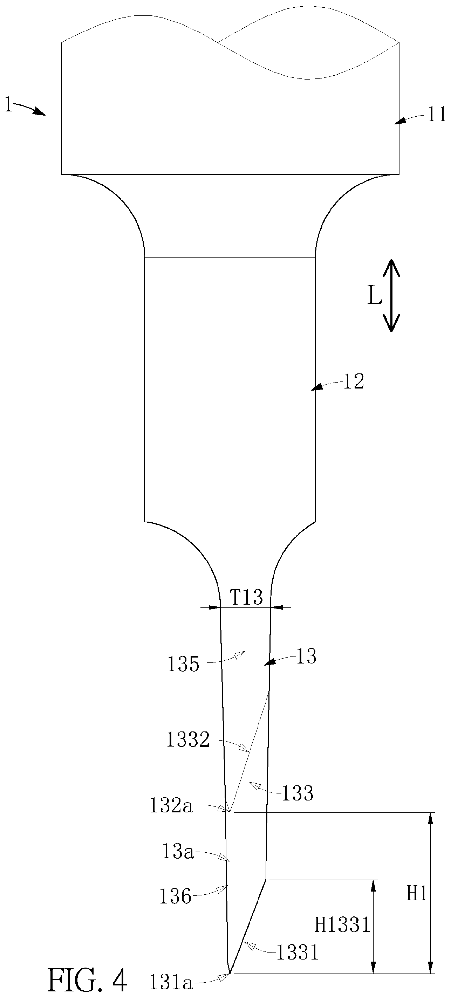

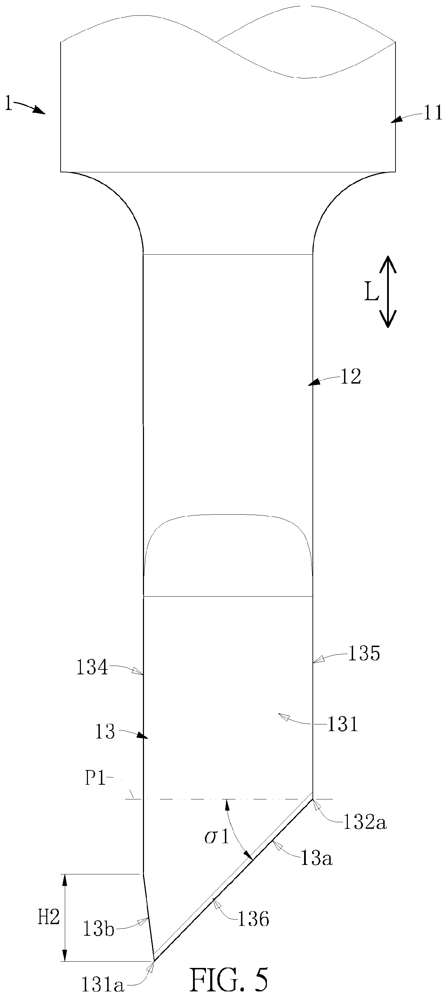

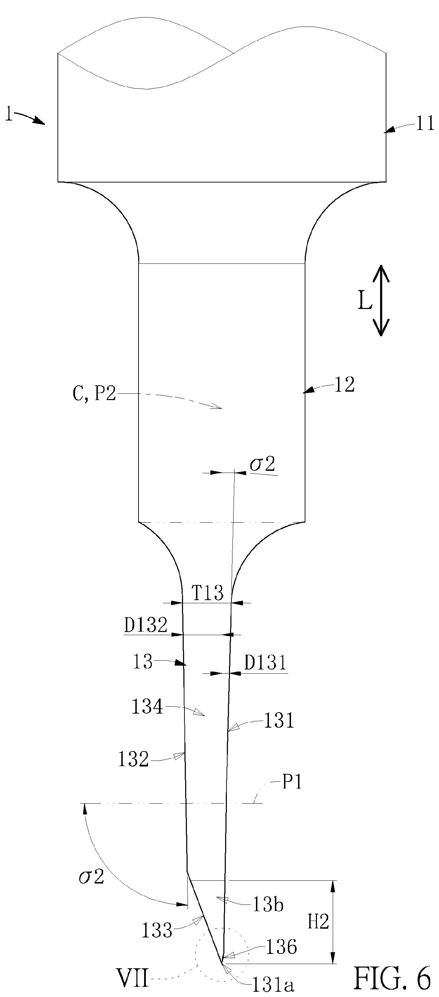

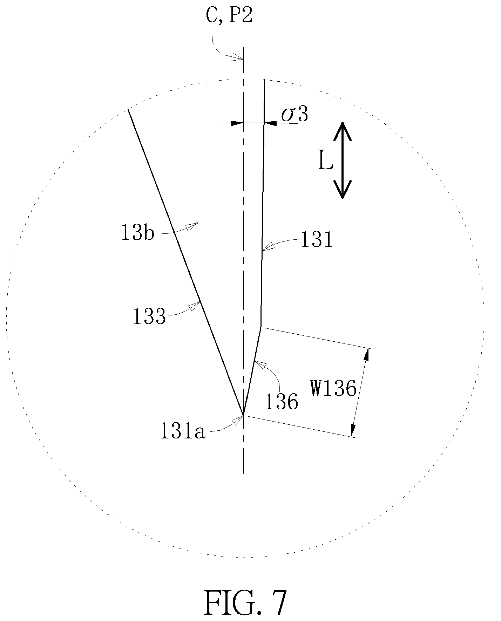

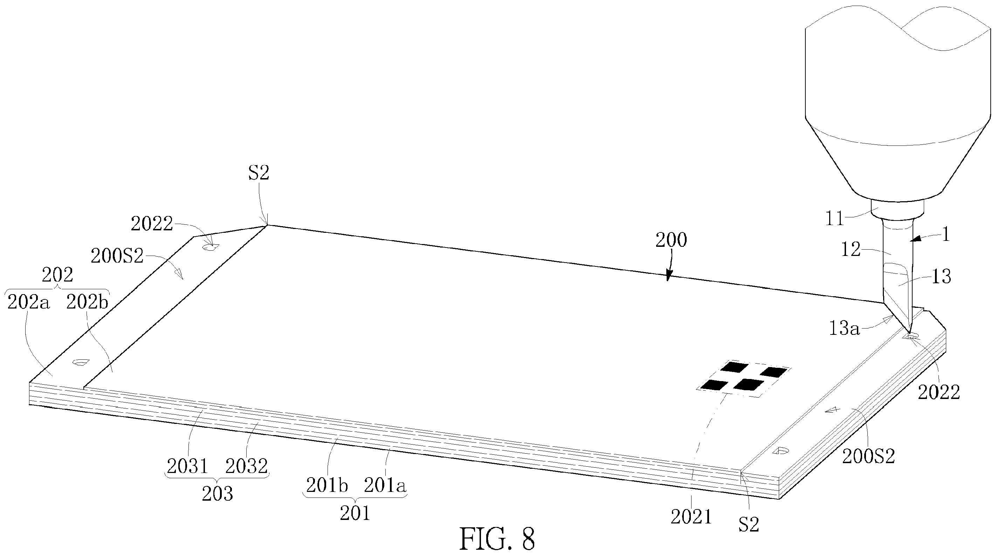

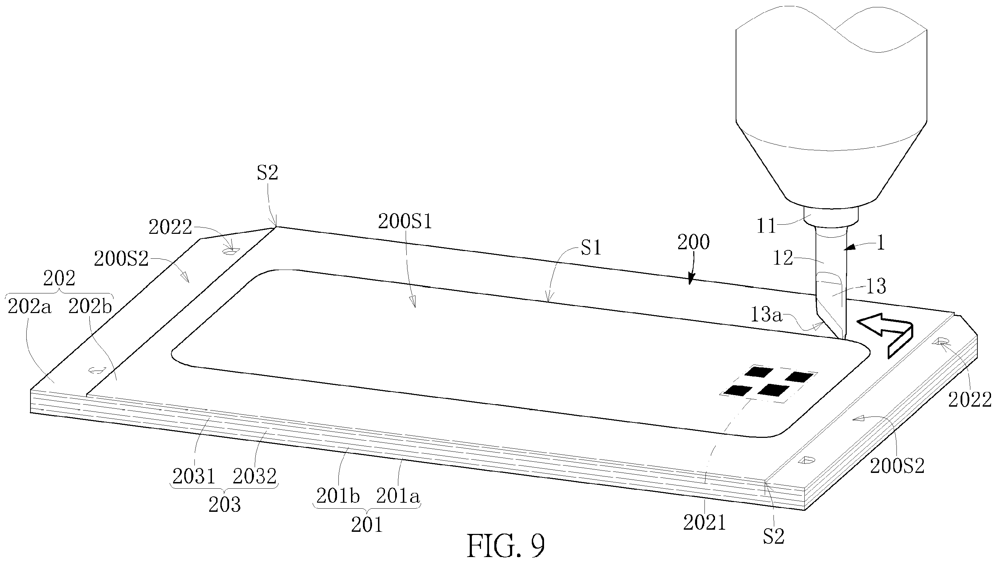

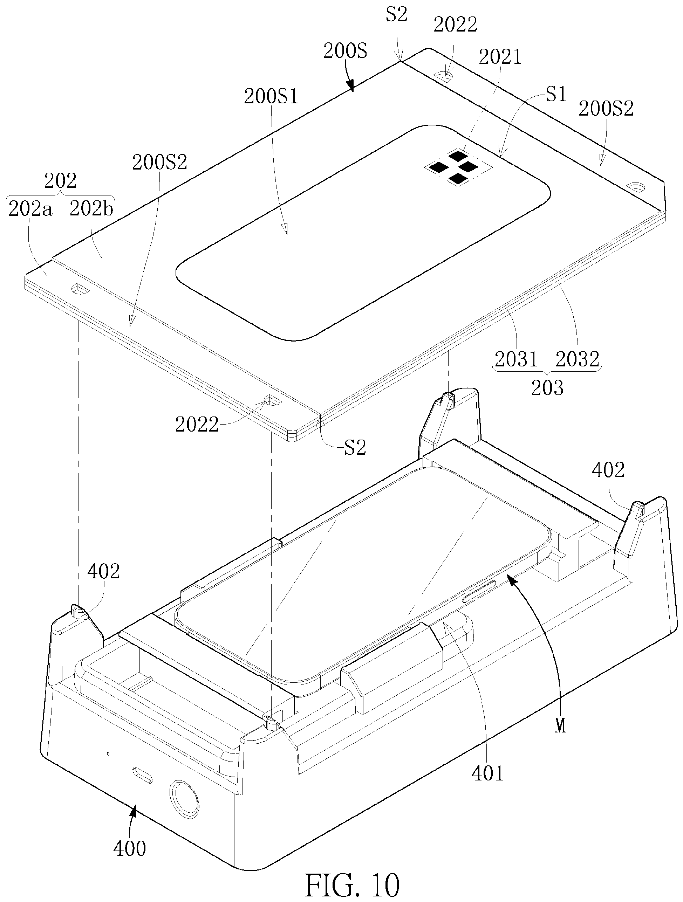

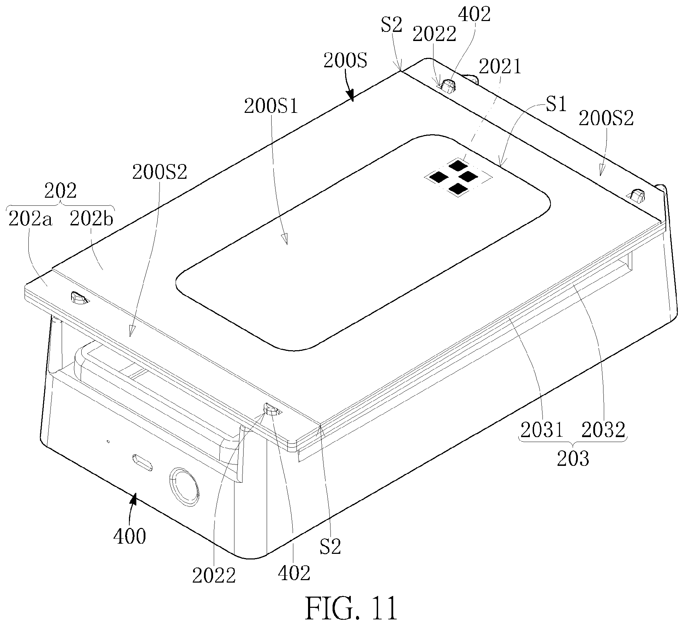

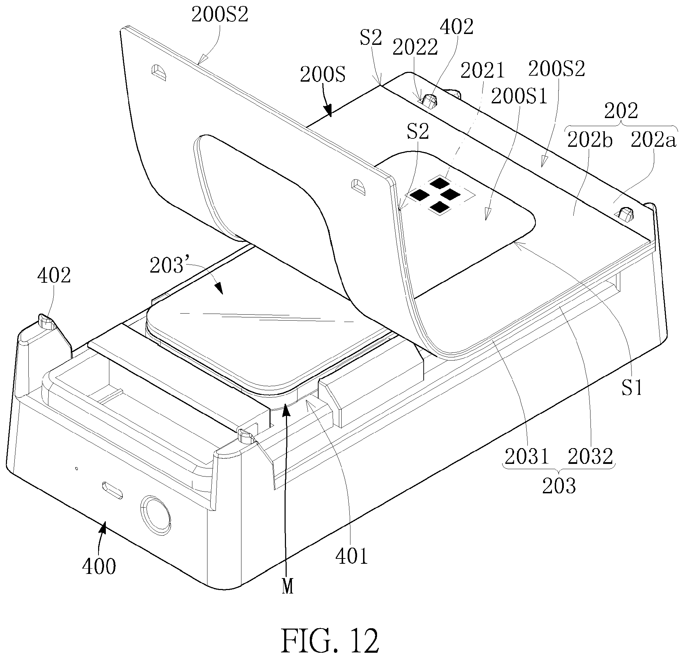

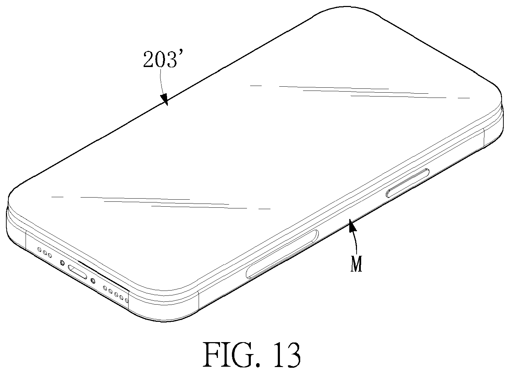

Referring to FIG. 1 to FIG. 13, a first embodiment of the present invention is provided. The present embodiment provides a cutting and attaching system for a screen protector having a high hardness. The cutting and attaching system includes a cutting apparatus 100, a universal sheet 200 being suitable for (or applied to) the cutting apparatus 100, a cloud server 300 electrically coupled to the cutting apparatus 100, and a film applicator 400 (shown in FIG. 10 to FIG. 13) that is located at a downstream of the cutting apparatus 100, but the present invention is not limited thereto. For example, in other embodiments of the present invention not shown in the drawings, the cutting and attaching system can be provided without the cloud server 300 according to practical requirements.

It should be noted that the cutting and attaching system is preferably provided for manufacturers that need to attach screen protectors onto various mobile apparatus, and the cutting apparatus 100 can perform a cutting process to the universal sheet 200 so as to form a screen protector 200S that corresponds to a selected type of mobile apparatus, thereby providing a customized function for cutting film. In other words, a cutting apparatus not having a customized function is different from the cutting and attaching system provided by the present embodiment. In addition, the mobile apparatus of the present embodiment is a mobile phone, but in other embodiments of the present invention not shown in the drawings, the mobile apparatus can be changed according to practical requirements (e.g., a tablet, a watch, or a camera).

Moreover, the universal sheet 200 in the present embodiment includes a bottom layer 201, a buffer layer 202, and a usage layer 203 that is sandwiched between the bottom layer 201 and the buffer layer 202. The usage layer 203 includes a hardened film 2031 and a bonding film 2032 that is opposite to the hardened film 2031. The bottom layer 201 is attached onto the bonding film 2032 of the usage layer 203, and the buffer layer 202 is attached onto the hardened film 2031 of the usage layer 203. Furthermore, in order to enable the universal sheet 200 to not produce burrs and to have a smooth periphery that is not scratchy after being cut, the universal sheet 200 is preferably provided with at least part of following features, but the present invention is not limited thereto. The bonding film 2032 is formed on the hardened film 2031, and a hardness of the hardened film 2031 is at least 5H. The buffer layer 202 includes a first buffer film 202a attached onto the hardened film 2031 and a second buffer film 202b that is attached onto the first buffer film 202a. In addition, the bottom layer 201 can be a cut-proof board 201a; or, the bottom layer 201 can include the cut-proof board 201a and a dust removal film 201b that is connected in-between the cut-proof board 201a and the bonding film 2032, but the present invention is not limited thereto. However, the dust removal film 201b can be omitted according to practical requirements.

Moreover, a hardness of the hardened film 2031, a hardness of the first buffer film 202a, and a hardness of the second buffer film 202b sequentially decrease, and a thickness of the hardened film 2031, a thickness of the first buffer film 202a, and a thickness of the second buffer film 202b sequentially decrease. In the present embodiment, the thickness of the second buffer film 202b is within a range from 40% to 90% (e.g., 75% to 90%) of the thickness of the first buffer film 202a, and the thickness of the first buffer film 202a is within a range from 60% to 75% of the thickness of the hardened film 2031. In other words, a sum of the thickness of the first buffer film 202a and the thickness of the second buffer film 202b is within a range from 60% to 105% (e.g., 95% to 105%) of a thickness of the bonding film 2032, and the thickness of the hardened film 2031 is within a range from 55% to 90% (e.g., 75% to 90%) of the thickness of the bonding film 2032.

For example, the first buffer film 202a is made of a soft material (e.g., PET), and the second buffer film 202b is also made of a soft material (e.g., PE). Moreover, the thickness of the first buffer film 202a can be within a range from 95 µm to 110 µm, the thickness of the second buffer film 202b can be within a range from 40 µm to 90 µm, the thickness of the hardened film 2031 can be within a range from 130 µm to 190 µm, the bonding film 2032 is a high-sticky AB glue, and the thickness of the bonding film 2032 can be within a range from 150 µm to 250 µm. A thickness of the cut-proof board 201a can be white and has a thickness being within a range from 140 µm to 225 µm, and the dust removal film 201b can be transparent and has a thickness being within a range from 100 µm to 150 µm.

In addition, the universal sheet 200 of the present embodiment has an identification code 2021 (e.g., a QR code) arranged on the buffer layer 202. The identification code 2021 can be directly printed on the buffer layer 202 or can be additionally adhered to the buffer layer 202, but the present invention is not limited thereto. For example, in other embodiments of the present invention not shown in the drawings, a quantity of layers of the universal sheet 200 can be adjusted or changed according to practical requirements (e.g., the bottom layer 201 can be omitted).

Specifically, a hardness (e.g., a pencil hardness) of the universal sheet 200 (or the hardened film 2031) is limited to having at least 5H, and an area of the universal sheet 200 is greater than an area of a screen of any mobile apparatus on the market. Accordingly, any cutting apparatus intended only for cutting soft sheets is different from the cutting and attaching system provided by the present embodiment.

Moreover, the material of the universal sheet 200 can be adjusted or changed according to practical requirements. For example, the universal sheet 200 can be a flexible screen protector, or can be made of polyethylene terephthalate (PET), recycled polyethylene terephthalate (RPET), or polymethyl methacrylate (PMMA), but the present invention is not limited thereto.

Specifically, in order to cut the universal sheet 200 having the hardness of at least 5H, the cutting apparatus 100 needs to have a cutter 1 having a specific structural design. In other words, the structural design of the cutter 1 is a key point for enabling the cutting apparatus 100 to cut the universal sheet 200 that has the hardness of at least 5H. In the present embodiment, through the cooperation of the cutter 1 and the universal sheet 200, the cutting apparatus 100 can cut the universal sheet 200 having the hardness of 7H, and the bonding film 2032 can be prevented from generating burrs and can be formed with a smooth periphery that is not scratchy after being cut. Accordingly, the following description describes the cutter 1, and then describes other components of the cutting apparatus 100.

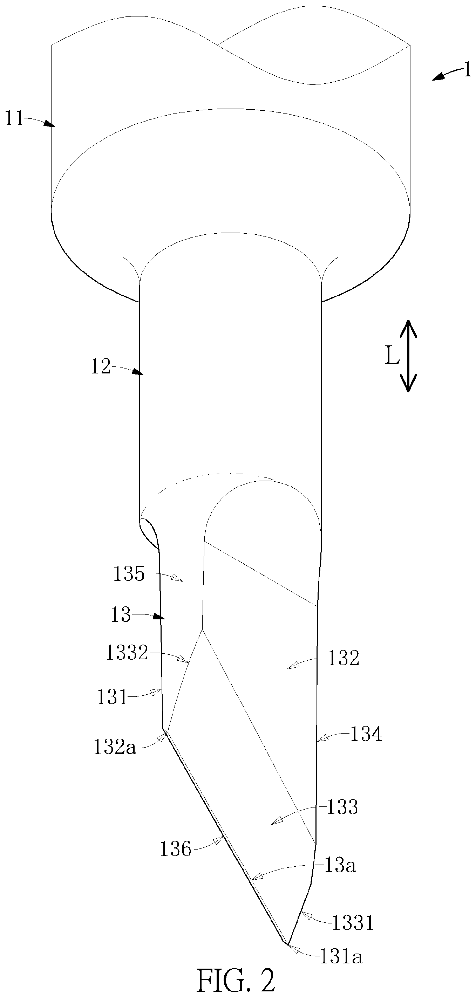

As shown in FIG. 2 to FIG. 7, the cutter 1 defines a transversal reference plane P1 perpendicular to a longitudinal direction L thereof and a longitudinal plane P2 that is perpendicular to the transversal reference plane P1. In the present embodiment, the cutter 1 includes an assembling segment 11, a supporting segment 12 connected to the assembling segment 11, and a cutting segment 13 that is connected to the supporting segment 12. The cutting segment 13 is integrally connected to the supporting segment 12, and the supporting segment 12 is soldered onto the assembling segment 11. In other words, a structure of the cutter 1 is formed by connecting two pieces, and the structure of the cutter 1 is preferably not a single one-piece structure.

In other words, the assembling segment 11 and the cutting segment 13 are respectively connected to two opposite ends of the supporting segment 12, and the supporting segment 12 is connected to a substantial center of and an end surface of the assembling segment 11, and the cutting segment 13 has an offset relative to an end surface of the supporting segment 12, but the present invention is not limited thereto.

The cutting segment 13 (e.g., an outer surface of the cutting segment 134) has a first lateral surface 131, a second lateral surface 132 spaced apart from the first lateral surface 131, a secondary bevel 136 connected to the first lateral surface 131, and a primary bevel 133 that is connected to the second lateral 132 and the secondary bevel 136. Each of the first lateral 131, the second lateral surface 132, and the primary bevel 133 is flat and planar, and a connection edge of the primary bevel 133 and the secondary bevel 136 is defined as a primary cutting edge 13a that is arranged on the longitudinal reference plane P2. The secondary bevel 136 has an elongated shape being parallel to the primary cutting edge 13a.

The first lateral surface 131 and the longitudinal reference plane P2 have a slanting angle σ3 therebetween that is within a range from 1 degree to 3 degrees, and the primary cutting edge 13a and the transversal reference plane P1 have a first angle σ1 therebetween that is within a range from 43 degrees to 47 degrees. The primary cutting edge 13a has a first height H1 along the longitudinal direction L, and the first height H1 is within a range from 0.98 mm to 1.08 mm. In addition, a width W136 of the secondary bevel 136 is within a range from 0.01 mm to 0.03 mm, and an area of the primary bevel 133 is at least 5 times an area of the secondary bevel 136.

Accordingly, the cutter 1 is provided with the cutting segment 13 having specific conditions to facilitate cutting of the universal sheet 200. In order to enable the cutter 1 to easily cut the universal sheet 200, the cutter 1 preferably has at least part of the following features, but the present invention is not limited thereto.

Specifically, the supporting segment 12 defines a central axis C parallel to the longitudinal direction L, and the central axis C in the present embodiment is arranged on the longitudinal reference plane P2, but the present invention is not limited thereto. Furthermore, a distance D131 between the first lateral surface 131 and the central axis L is less than a distance D132 between the second lateral surface 132 and the central axis L. The second lateral surface 132 and the transversal reference plane P1 have a second angle σ2 therebetween that is within a range from 91 degrees to 91.5 degrees.

Moreover, the primary cutting edge 13a has a tip 131a arranged away from the supporting segment 12 and a top end 132a that is arranged adjacent to the supporting segment 12, and the primary bevel 133 has a bottom side 1331 connected to the tip 131a and a top side 1332 that is connected to the top end 132a. The bottom side 1331 of the primary bevel 133 has a height H1331 along the longitudinal direction L, and the height H1331 is within a range from 0.73 mm to 0.77 mm.

The cutting segment 13 has a first end surface 134 and a second end surface 135 that is spaced apart from the first end surface 134. The first end surface 134 is connected to the first lateral surface 131, the second lateral surface 132, and the bottom side 1331 of the primary bevel 133 so as to jointly form (or define) the tip 131a. The second end surface 135 is connected to the first lateral surface 131, the second lateral surface 132, and the top side 1332 of the primary bevel 133 so as to jointly form (or define) the top end 132a.

The first lateral surface 131, the first end surface 134, the second lateral surface 132, and the second end surface 135 are connected to jointly form a loop shape and are jointly defined as a surrounding surface of the cutting segment 13. The first lateral surface 131 and the second lateral surface 132 are spaced apart from each other by a blade thickness T13 that has a same value in a direction from the first end surface 134 to the second end surface 135, but the present invention is not limited thereto. In other words, in other embodiments of the present invention not shown in the drawings, the blade thickness T13 can gradually increase from the tip 131a to the top end 132a, thereby effectively supporting the primary cutting edge 13a. Specifically, the blade thickness T13 is preferably within a range from 0.26 mm to 0.31 mm, but the present invention is not limited thereto.

The first end surface 134 has a secondary cutting edge 13b that extends from the tip 131a and that has a second height H2 along the longitudinal direction L, and the second height H2 is within a range from 4 µm to 6 µm. Accordingly, the primary cutting edge 13a and the secondary cutting edge 13b of the cutter 1 are cooperated with each other through the above specific conditions thereof, thereby facilitating the cutting of the universal sheet 200, effectively preventing the bonding film 2032 of the universal sheet 200 from generating burrs, and enabling the universal sheet 200 to have a smooth periphery that is not scratchy after being cut.

It should be noted that the supporting segment 12 and the cutting segment 13 of the cutter 1 are preferably made of tungsten steel or tungsten powder metallurgy high-speed steel, an outer surface of the cutting segment 13 can be further formed with a diamond like carbon (DLC) coating layer that is an amorphous coating film composed of carbon and hydrogen and that combines the high hardness of diamond and the lubricity of graphite, and the DLC coating layer is preferably formed in a PVD manner or a PACVD manner, but the present invention is not limited thereto. For example, the cutter 1 can be made of other materials, or the outer surface of the cutter 1 can have other hardening treatments. Moreover, the supporting segment 12 and the cutting segment 13 in the present embodiment can be made of a non-magnetizable material, and the assembling segment 11 can be made of a magnetizable material.

In addition, the cutter 1 in the present embodiment is applied to the cutting apparatus 100, but the present invention is not limited thereto. For example, in other embodiments of the present invention not shown in the drawings, the cutter 1 can be independently used (e.g., sold) or can be used in cooperation with other components.

As shown in FIG. 1, FIG. 8, and FIG. 9, the structure of the cutter 1 is described in the above description, and the following description describes other components of the cutting apparatus 100. The cutting apparatus 100 includes a carrying machine 2, a displacement mechanism 3, a processing module 4, and a scanner 5. The carrying machine 2, the displacement mechanism 3, the processing module 4, and the scanner 5 are assembled to the carrying machine 2, and the displacement mechanism 3 and the scanner 5 are electrically coupled to the processing module 4.

Moreover, the displacement mechanism 3 is movable relative to the carrying machine 2, and the processing module 4 is configured to move the displacement mechanism 3 along a screen cutting path and a hole cutting path that is different from the screen cutting path by being electrically coupled to the displacement mechanism 3. The cutter 1 is assembled to the displacement mechanism 3 through the assembling segment 11, such that the cutter 1 and the displacement mechanism 3 can be moved synchronously. In the present embodiment, the assembling segment 11 is made of a magnetizable material and can be fixed to the displacement mechanism 3 in a magnetic attraction manner, such that when the cutter 1 and the displacement mechanism 3 are moved, the displacement mechanism 3 can be operated to rotate the assembling segment 11 by changing a magnetism relative to the assembling segment 11.

In addition, the cloud server 300 is electrically coupled to the processing module 4 and the scanner 5. When the universal sheet 200 is fixed onto the carrying machine 2, the scanner 5 is configured to scan the identification code 2021 to generate a signal, such that the cloud server 300 is configured to receive the signal through the processing module 4 for allowing the cutting apparatus 100 to perform the cutting process by choosing a corresponding pattern file and for enabling the cutting apparatus 100 to identify a material of the universal sheet 200.

It should be noted that the processing module 4 in the present embodiment further includes a touch panel for providing a user to input a type of the mobile apparatus that is required to be attached with a screen protector. Accordingly, the cutting apparatus 100 can perform the cutting process that corresponds to the type of the mobile apparatus that is inputted into the processing module 4 by the user (e.g., the screen cutting path corresponding to a contour of a screen of the mobile apparatus), but the present invention is not limited thereto. For example, in other embodiments of the present invention not shown in the drawings, the processing module 4 can obtain the type of the mobile apparatus by receiving a signal from an external apparatus (e.g., a computer or a user's mobile phone) in other manners.

When the universal sheet 200 is placed on the cutting apparatus 100 under the cutting process for forming the screen protector 200S, the universal sheet 200 is fixed to the carrying machine 2, the displacement mechanism 3 is driven by the processing module 4 to enable the primary cutting edge 13a of the cutter 1 to cut the buffer layer 202 and the usage layer 203 along the hole cutting path for forming a positioning contour S2 that has a plurality of positioning holes 2022, and then along the screen cutting path for forming a screen contour S1 that is located inside of the positioning contour S2.

Specifically, the cutting apparatus 100 is configured to cut the universal sheet 200 from the buffer layer 202 and does not cut the universal sheet 200 from the bonding film 2032 of the usage layer 203, such that damage to an adhesive side of the bonding film 2032 can be effectively avoided, burrs can be prevented from being forming on the usage layer 203, and the screen contour S1 can have a smooth periphery that is not scratchy after being cut.

It should be noted that the displacement mechanism 3 can drive the cutter 1 to move relative to the universal sheet 200 along an X axial direction, a Y axial direction, and a Z axial direction, which are perpendicular to each other, and a moved object (e.g., the cutter 1 or the universal sheet 200) can be adjusted or changed according to practical requirements. For example, the cutter 1 can be moved along the X axial direction and the Z axial direction by the displacement mechanism 3, and the universal sheet 200 can be moved along the Y axial direction by the displacement mechanism 3, such that the cutter 1 can be moved relative to the universal sheet 200 along the hole cutting path and the screen cutting path.

Moreover, after the universal sheet 200 is cut to form the screen protector 200S by performing of the cutting process, the buffer layer 202 and the usage layer 203 jointly define a screen region 200S1 and a positioning region 200S2 that surrounds the screen region 200S1 and that has the positioning holes 2022. In other words, a portion 203' of the usage layer 203 arranged inside of the screen contour S1 is provided for attaching onto a screen of a mobile apparatus M.

As shown in FIG. 10 to FIG. 13, the film applicator 400 includes an accommodating chamber 401 and a plurality of positioning pillars 402 that are arranged on two opposite sides of the accommodating chamber 401. The accommodating chamber 401 is configured to hold the mobile apparatus M. Moreover, a relative position of the positioning pillars 402 is identical to a relative position of the positioning holes 2022 of the positioning contour S2, and a relative position between the positioning pillars 402 and the screen of the mobile apparatus M is identical to a relative position between the positioning holes 2022 and the screen contour S1 (or edges of the screen region 200S1). The relative position of the positioning pillars 402 of the film applicator 400 preferably has a fixed position and cannot be changed, but the present invention is not limited thereto.

Accordingly, when the accommodating chamber 401 of the film applicator 400 holds the mobile apparatus M, and the positioning holes 2022 of the positioning region 200S2 are respectively sleeved at the positioning pillars 402, the screen region 200S1 (e.g., the portion 203' of the usage layer 203) faces toward the screen of the mobile apparatus M for allowing the screen region 200S1 to be pressed and attached onto the screen of the mobile apparatus M.

### [Second Embodiment]

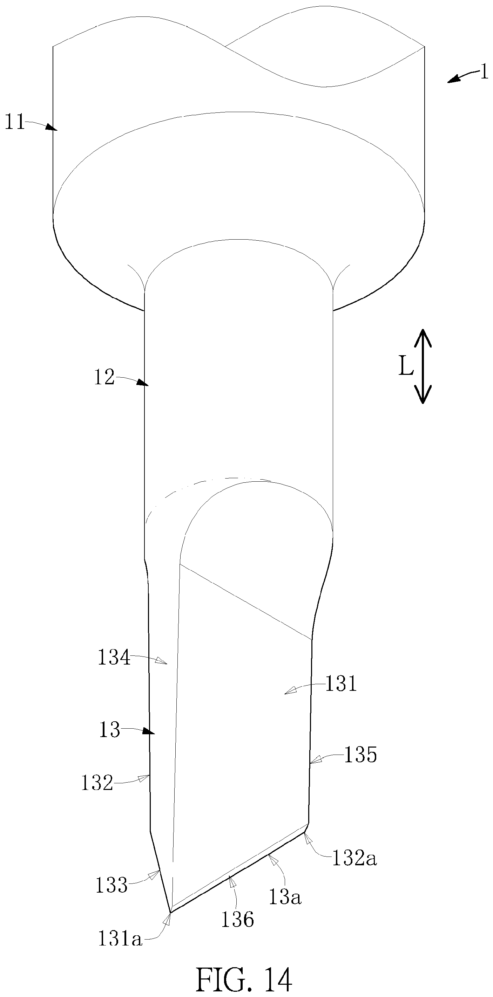

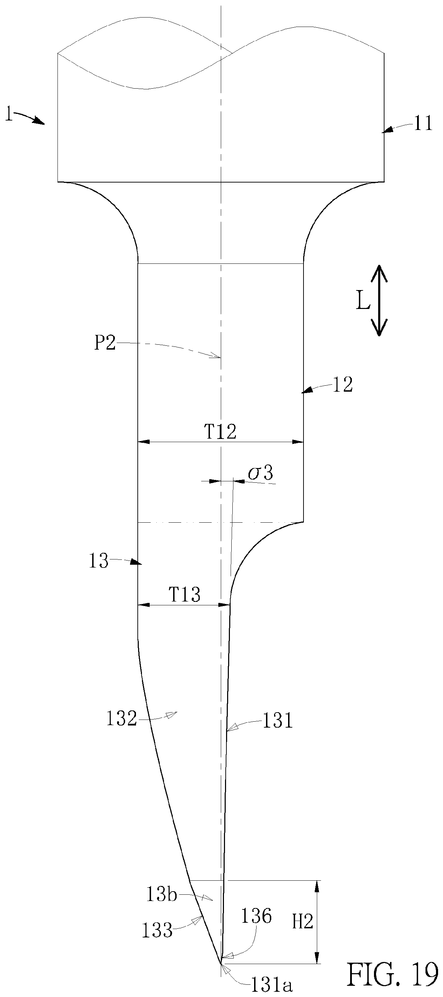

Referring to FIG. 14 and FIG. 19, a second embodiment of the present invention, which is similar to the first embodiment of the present invention, is provided. For the sake of brevity, descriptions of the same components in the first and second embodiments of the present invention will be omitted herein, and the following description only discloses different features (e.g., the cutting segment 13 of the cutter 1) between the first and second embodiments.

In the present embodiment, the structure of the cutting segment 13 of the cutter 1 can be adjusted according to design requirements for changing a partial property of the cutter 1 (e.g., a structural strength of the cutter 1) under a condition that the cutting segment 13 can cut the universal sheet 200 having at least 5H hardness. For example, as shown in FIG. 14, the cutting segment 13 of the cutter 1 can be provided without the secondary cutting edge described in the first embodiment according to design requirements.

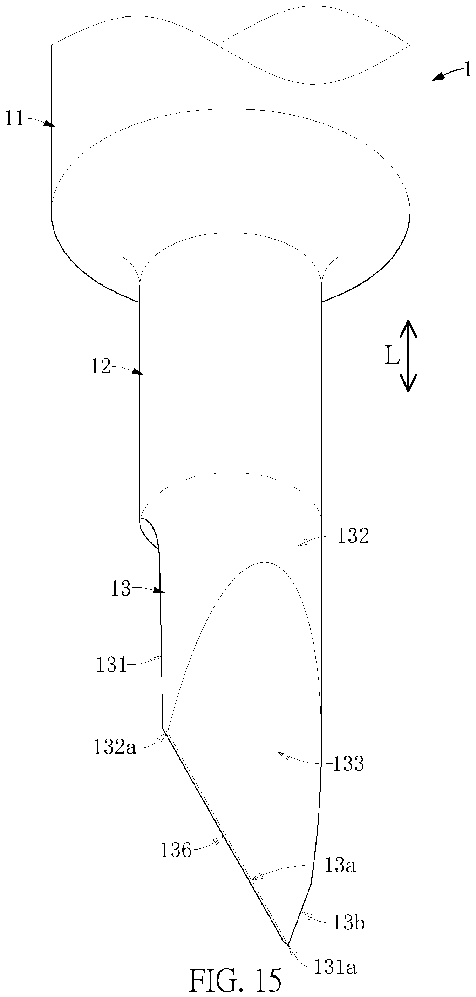

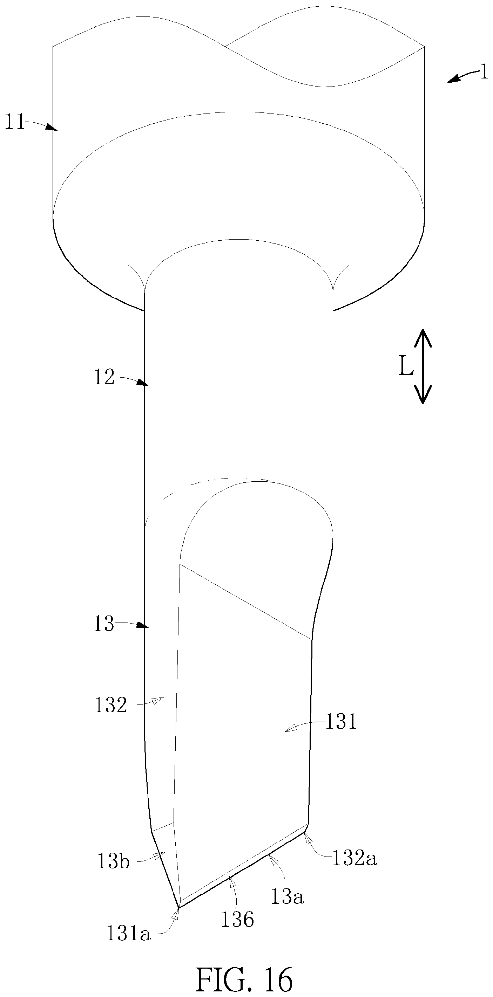

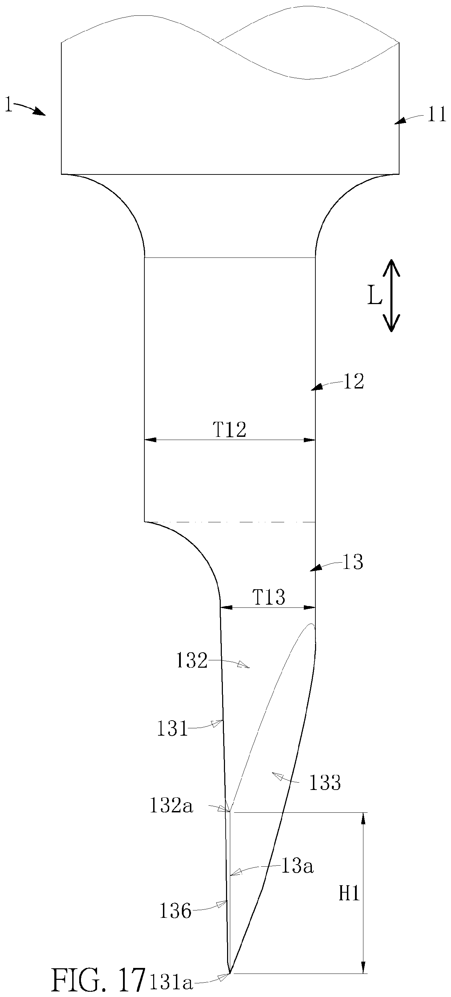

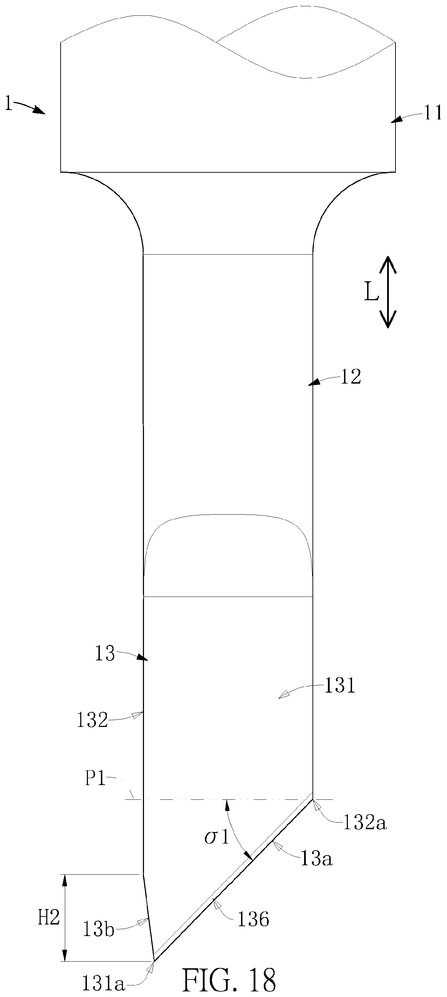

Moreover, as shown in FIG. 15 to FIG. 19, the supporting segment 12 has a surrounding surface having a circular shape, the first lateral surface 131 is a planar lateral surface 131, and the second lateral surface 132 is a curved (or arced) lateral surface 132 connected to the planar lateral surface 131. In other words, the second lateral surface 132 of the present embodiment is formed in a curved (or arced) shape for replacing the second lateral surface, the first end surface, and the second end surface that are described in the first embodiment. Furthermore, the curved lateral surface 132 is flush with the surrounding surface of the supporting segment 12. The planar lateral surface 131 and the curved lateral surface 132 have a maximum thickness T13 therebetween that is within a range from 40% to 55% of a minimum outer diameter T12 of the supporting segment 12.

### [Beneficial Effects of the Embodiments]

In conclusion, the cutting and attaching system in the present invention is operated through the cooperation of the cutting apparatus, the universal sheet, and the film applicator, so that the cutting apparatus can perform the cutting process to the universal sheet having at least 5H hardness according to the film applicator and the mobile apparatus, thereby forming the screen protector that is suitable to be applied to the film applicator and the mobile apparatus and that has no burrs and no scratchy structure. Accordingly, the cutting and attaching system can be used to implement a customized film attaching requirement by cutting the universal sheet until attaching the screen protector onto the mobile apparatus.

Moreover, the cutting and attaching system in the present invention is provided with the cutting segment having the specific features (e.g., a scope of the slanting angle, the arrangement of the secondary bevel, the first angle corresponding to the primary cutting edge and being within a range from 43 degrees to 47 degrees, and the first height of the primary cutting edge being within a range from 0.98 mm to 1.08 mm), thereby facilitating the cutting of the universal sheet (or the hardened film) that has at least 5H hardness.

Specifically, in the cutter provided by the present invention, the primary cutting edge and the secondary cutting edge are cooperated with each other through the above specific conditions (e.g., the second height of the secondary cutting edge being within a range from 4 µm to 6 µm) thereof, thereby facilitating the cutting of the universal sheet that has at least 5H hardness, effectively preventing the bonding film of the universal sheet from generating burrs, and enabling the universal sheet to have a smooth periphery that is not scratchy after being cut.

## Claims

1. A cutting and attaching system for a screen protector (200S) having a high hardness, the system comprising:
a cutting apparatus (100) including:
a carrying machine (2);
a displacement mechanism (3) being assembled to the carrying machine (2) and being movable relative to the carrying machine (2);
a processing module (4) assembled to the carrying machine (2), wherein the processing module (4) is electrically coupled to the displacement mechanism (3) and is configured to move the displacement mechanism (3) along a hole cutting path and a screen cutting path that is different from the hole cutting path, and wherein the screen cutting path corresponds to a contour of a screen of a mobile apparatus (M); and
a cutter (1) assembled to the displacement mechanism (3), wherein the cutter (1) defines a transversal reference plane (P1) and a longitudinal plane that is perpendicular to transversal reference plane (P1), the transversal reference plane (P1) being perpendicular to a longitudinal direction (L) of the cutter (1), and wherein the cutter (1) includes:
a supporting segment (12); and
a cutting segment (13) connected to the supporting segment (12), wherein the cutting segment (13) has a first lateral surface (131), a second lateral surface (132) corresponding to the first lateral surface (131), a secondary bevel (136) connected to the first lateral surface (131), and a primary bevel (133) that is connected to the second lateral surface (132) and the secondary bevel (136), and wherein a connection edge of the primary bevel (133) and the secondary bevel (136) is defined as a primary cutting edge (13a) that is arranged on the longitudinal reference plane (P2);
wherein the first lateral surface (131) and the longitudinal reference plane (P2) have a slanting angle (*σ*3) therebetween that is within a range from 1 degree to 3 degrees, and the primary cutting edge (13a) and the transversal reference plane (P1) have a first angle (*σ*1) therebetween that is within a range from 43 degrees to 47 degrees, and wherein the primary cutting edge (13a) has a first height (H1) along the longitudinal direction (L), the first height (H1) being within a range from 0.98 mm to 1.08 mm; the cutting apparatus (100) being configured to cut and apply
a universal sheet (200) that is configured to be cut to form a screen protector (200S) through a cutting process of the cutting apparatus (100), such universal sheet (200) including:
a usage layer including a hardened film (2031) and a bonding film (2032) that is formed on the hardened film (2031), wherein a hardness of the hardened film (2031) is at least 5H;
a buffer layer (202) including a first buffer film (202a) attached onto the hardened film (2031) and a second buffer film (202b) that is attached onto the first buffer film (202a), wherein a hardness of the hardened film (2031), a hardness of the first buffer film (202a), and a hardness of the second buffer film (202b) sequentially decrease, and wherein a thickness of the hardened film (2031), a thickness of the first buffer film (202a), and a thickness of the second buffer film (202b) sequentially decrease; and
a bottom layer (201) attached onto the bonding film (2032);
wherein, when in use the universal sheet (200) is placed on the cutting apparatus (100) under the cutting process, the bottom layer (201) of the universal sheet (200) is fixed to the carrying machine (2), the displacement mechanism (3) is driven by the processing module (4) to enable the primary cutting edge (13a) of the cutter (1) to cut the buffer layer (202) and the usage layer along the hole cutting path for forming a positioning contour (S2) that has a plurality of positioning holes (2022), and then along the screen cutting path for forming a screen contour (S1) that is located inside of the positioning contour (S2), such that the buffer layer (202) and the usage layer jointly define a screen region (200S1) and a positioning region (200S2) that surrounds the screen region (200S1) and that has the positioning holes (2022); and
a film applicator (400) located at a downstream of the cutting apparatus (100) and including:
an accommodating chamber (401) configured to hold the mobile apparatus (M); and
a plurality of positioning pillars (402) arranged on two opposite sides of the accommodating chamber (401), wherein a relative position of the positioning pillars (402) is identical to a relative position of the positioning holes (2022) of the positioning contour (S2), and a relative position between the positioning pillars (402) and the screen of the mobile apparatus (M) is identical to a relative position between the positioning holes (2022) and the screen contour (S1);
wherein, the cutting and attaching system is configured such that in use the accommodating chamber (401) of the film applicator (400) holds the mobile apparatus (M) and the positioning holes (2022) of the positioning region (200S2) are respectively sleeved at the positioning pillars (402), the screen region (200S1) faces toward the screen of the mobile apparatus (M) for allowing the screen region (200S1) to be pressed onto the screen.

2. The cutting and attaching system according to claim 1, wherein the primary cutting edge (13a) has a tip (131a) arranged away from the supporting segment (12) and a top end (132a) that is arranged adjacent to the supporting segment (12), the primary bevel (133) has a bottom side (1331) connected to the tip (131a) and a top side (1332) that is connected to the top end (132a), and the first lateral surface (131) and the second lateral surface (132) are spaced apart from each other, and wherein the cutting segment (13) has:
a first end surface (134) that is connected to the first lateral surface (131), the second lateral surface (132), and the bottom side (1331) of the primary bevel (133) so as to jointly form the tip (131a); and
a second end surface (135) that is connected to the first lateral surface (131), the second lateral surface (132), and the top side (1332) of the primary bevel (133) so as to jointly form the top end (132a).

3. The cutting and attaching system according to claim 2, wherein the first end surface (134) has a secondary cutting edge (13b) that extends from the tip (131a) and that has a second height (H2) along the longitudinal direction (L), and wherein the second height (H2) is within a range from 4 µm to 6 µm.

4. The cutting and attaching system according to anyone of claims 1 to 3, wherein the secondary bevel (136) has an elongated shape being parallel to the primary cutting edge (13a), a width (W136) of the secondary bevel (136) is within a range from 0.01 mm to 0.03 mm, and an area of the primary bevel (133) is at least 5 times an area of the secondary bevel (136).

5. The cutting and attaching system according to anyone of claims 2 to 4, wherein a bottom side (1331) of the primary bevel (133) has a height along the longitudinal direction (L), the height being within a range from 0.73 mm to 0.77 mm, wherein the supporting segment (12) defines a central axis (C) parallel to the longitudinal direction (L), and a distance (D131) between the first lateral surface (131) and the central axis (C) is less than a distance (D132) between the second lateral surface (132) and the central axis (C), and wherein the second lateral surface (132) and the transversal reference plane (P1) have a second angle (*σ*2) therebetween that is within a range from 91 degrees to 91.5 degrees.

6. The cutting and attaching system according to anyone of claims 1 to 5, wherein the cutting segment (13) is integrally connected to the supporting segment (12), the cutter (1) includes an assembling segment (11), and the supporting segment (12) is soldered onto the assembling segment (11).

7. The cutting and attaching system according to anyone of claim 1 to 6, wherein the cutting apparatus (100) is suitable for a certain type of the universal sheet (200) that has an identification code (2021) arranged on the buffer layer (202), and the cutting apparatus (100) further includes a scanner (5) that is assembled to the carrying machine (2) and that is electrically coupled to the processing module (4), wherein the cutting and attaching system includes a cloud server (300) that is electrically coupled to the processing module (4) and the scanner (5), and wherein, when in use the universal sheet (200) is fixed onto the carrying machine (2), the scanner (5) is configured to scan the identification code (2021) to generate a signal, such that the cloud server (300) is configured to receive the signal through the processing module (4) for allowing the cutting apparatus (100) to perform the cutting process.

8. The cutting and attaching system according to anyone of claims 1 to 7, wherein the cutting and attaching system is prepared to cut and apply a sheet (200), and wherein the thickness of the second buffer film (202b) is within a range from 40% to 90% of the thickness of the first buffer film (202a), and the thickness of the first buffer film (202a) is within a range from 60% to 75% of the thickness of the hardened film (2031).

9. The cutting and attaching system according to anyone of claims 1 to 8, wherein the cutting and attaching system is prepared to cut and apply a sheet (200), and wherein a sum of the thickness of the first buffer film (202a) and the thickness of the second buffer film (202b) is within a range from 60% to 105% of a thickness of the bonding film (2032), and the thickness of the hardened film (2031) is within a range from 55% to 90% of the thickness of the bonding film (2032).

10. The cutting and attaching system according to anyone of claim 1 to 9, wherein the supporting segment (12) has a surrounding surface having a circular shape, the first lateral surface (131) is a planar lateral surface (131), and the second lateral surface (132) is a curved lateral surface (132) that is flush with the surrounding surface of the supporting segment (12).

## Patentansprüche

1. Schneid- und Befestigungssystem für einen Bildschirmschutz (200S) mit hoher Härte, wobei das System umfasst:
eine Schneidvorrichtung (100) mit:
einer Trägermaschine (2);
einen Verschiebemechanismus (3), der an der Trägermaschine (2) angebracht und relativ zu der Trägermaschine (2) beweglich ist;
ein Verarbeitungsmodul (4), das an der Trägermaschine (2) angebracht ist, wobei das Verarbeitungsmodul (4) elektrisch mit dem Verschiebemechanismus (3) gekoppelt ist und ausgelegt ist, den Verschiebemechanismus (3) entlang einer Lochschneidebahn und einer Bildschirmschneidebahn zu bewegen, die sich von der Lochschneidebahn unterscheidet, und wobei die Bildschirmschneidebahn einer Kontur eines Bildschirms eines Mobilgeräts (M) entspricht;
und
ein Schneidwerkzeug (1), das an dem Verschiebemechanismus (3) angebracht ist, wobei das Schneidwerkzeug (1) eine Querreferenzebene (P1) und eine Längsebene definiert, die senkrecht zur Querreferenzebene (P1) ist, wobei die Querreferenzebene (P1) senkrecht zu einer Längsrichtung (L) des Schneidwerkzeugs (1) steht, und wobei das Schneidwerkzeug (1) umfasst:
ein Stützsegment (12); und
ein mit dem Stützsegment (12) verbundenes Schneidsegment (13), wobei das Schneidsegment (13) eine erste Seitenfläche (131), eine der ersten Seitenfläche (131) entsprechende zweite Seitenfläche (132), eine mit der ersten Seitenfläche (131) verbundene sekundäre Fase (136), sowie eine primäre Fase (133), die mit der zweiten Seitenfläche (132) und der sekundären Fase (136) verbunden ist, und wobei eine Verbindungskante der primären Fase (133) und der sekundären Fase (136) als primären Schneidkante (13a) definiert ist, die auf der Längsreferenzebene (P2) angeordnet ist;
wobei die erste Seitenfläche (131) und die Längsreferenzebene (P2) einen Neigungswinkel (σ3) zueinander aufweisen, der in einem Bereich von 1 Grad bis 3 Grad liegt, und die primäre Schneidkante (13a) und die Querreferenzebene (P1) einen ersten Winkel (σ1) zwischen sich aufweisen, der in einem Bereich von 43 Grad bis 47 Grad liegt, und wobei die primäre Schneidkante (13a) eine erste Höhe (H1) entlang der Längsrichtung (L) aufweist, wobei die erste Höhe (H1) in einem Bereich von 0,98 mm bis 1,08 mm liegt; wobei die Schneidvorrichtung (100) so ausgelegt ist, dass sie eine Universalfolie (200) schneidet und aufbringt, die so ausgelegt ist, dass sie durch einen Schneidvorgang der Schneidvorrichtung (100) zu einem Bildschirmschutz (200S) zugeschnitten wird, wobei die Universalfolie (200) umfasst:
eine Gebrauchsebene, die ein gehärteter Film (2031) und einen auf dem gehärteten Film (2031) ausgebildeten Haftfilm (2032) umfasst, wobei die Härte des gehärteten Films (2031) mindestens 5H beträgt;
eine Pufferebene (202) mit einem ersten Pufferfilm (202a), der auf dem gehärteten Film (2031) angebracht ist, und einen zweiten Pufferfilm (202b), der auf dem ersten Pufferfilm (202a) angebracht ist, wobei eine Härte des gehärteten Films (2031), eine Härte des ersten Pufferfilms (202a) und eine Härte des zweiten Pufferfilms (202b) sequenziell abnehmen und wobei eine Dicke des gehärteten Films (2031), eine Dicke des ersten Pufferfilms (202a) und eine Dicke des zweiten Pufferfilms (202b) sequenziell abnehmen; und
eine auf den Haftfilm (2032) aufgebrachte Unterschicht (201);
wobei, wenn die Universalfolie (200) im Einsatz während des Schneidvorgangs auf die Schneidvorrichtung (100) gelegt wird, die Unterschicht (201) der Universalfolie (200) an der Trägermaschine (2) befestigt wird, der Verschiebemechanismus (3) vom Verarbeitungsmodul (4) angetrieben wird, damit die primäre Schneidkante (13a) des Schneidwerkzeugs (1) die Pufferebene (202) und die Gebrauchsebene entlang der Lochschneidebahn schneiden kann, um eine Positionierungskontur (S2) zu bilden, die eine Mehrzahl von Positionierungslöchern (2022) aufweist, und dann entlang der Bildschirmschneidebahn, um eine Bildschirmkontur (S1) zu bilden, die sich innerhalb der Positionierungskontur (S2) befindet, sodass die Pufferebene (202) und die Gebrauchsebene gemeinsam einen Bildschirmbereich (200S1) und einen Positionierungsbereich (200S2) definieren, der den Bildschirmbereich (200S1) umgibt und die Positionierungslöcher (2022) aufweist; und
einen Filmapplikator (400), der stromabwärts der Schneidvorrichtung (100) angeordnet ist und umfasst:
eine Aufnahmekammer (401), die so konfiguriert ist, dass sie das Mobilgerät (M) aufnimmt; sowie
eine Mehrzahl von Positioniersäulen (402), die an zwei gegenüberliegenden Seiten der Aufnahmekammer (401) angeordnet sind, wobei eine relative Position der Positioniersäulen (402) mit einer relativen Position der Positionierlöcher (2022) der Positionierungskontur (S2) identisch ist und eine relative Position zwischen den Positioniersäulen (402) und dem Bildschirm des Mobilgeräts (M) mit einer relativen Position zwischen den Positionierungslöchern (2022) und der Bildschirmkontur (S1) identisch ist;
wobei das Schneid- und Befestigungssystem so konfiguriert ist, dass im Betrieb die Aufnahmekammer (401) des Filmapplikators (400) das Mobilgerät (M) hält und die Positionierungslöcher (2022) des Positionierungsbereichs (200S2) jeweils auf die Filmapplikatoren (402) aufgesteckt sind, wobei der Bildschirmbereich (200S1) zum Bildschirm des Mobilgeräts (M) hin ausgerichtet ist, damit der Bildschirmbereich (200S1) auf den Bildschirm gedrückt werden kann.

2. Schneid- und Befestigungssystem nach Anspruch 1, wobei die primäre Schneidkante (13a) eine vom Stützsegment (12) entfernt angeordnete Spitze (131a) und ein oberes Ende (132a) aufweist, das benachbart zum Stützsegment (12) angeordnet ist, wobei die primäre Fase (133) eine mit der Spitze (131a) verbundene Unterseite (1331) und eine mit dem oberen Ende (132a) verbundene Oberseite (1332) aufweist, und die erste Seitenfläche (131) und die zweite Seitenfläche (132) voneinander beabstandet sind, und wobei das Schneidsegment (13) aufweist:
eine erste Endfläche (134), die mit der ersten Seitenfläche (131), der zweiten Seitenfläche (132) und der Unterseite (1331) der primären Fase (133) verbunden ist, um gemeinsam die Spitze (131a) zu bilden; und
eine zweite Endfläche (135), die mit der ersten Seitenfläche (131), der zweiten Seitenfläche (132) und der Oberseite (1332) der primären Fase (133) verbunden ist, um gemeinsam das obere Ende (132a) zu bilden.

3. Schneid- und Befestigungssystem nach Anspruch 2, wobei die erste Endfläche (134) eine sekundäre Schneidkante (13b) aufweist, die sich von der Spitze (131a) aus erstreckt und entlang der Längsrichtung (L) eine zweite Höhe (H2) aufweist, und wobei die zweite Höhe (H2) in einem Bereich von 4 µm bis 6 µm liegt.

4. Schneid- und Befestigungssystem nach einem der Ansprüche 1 bis 3, wobei die sekundäre Fase (136) eine längliche Form aufweist, die parallel zur primären Schneidkante (13a) verläuft, wobei eine Breite (W136) der sekundären Fase (136) in einem Bereich von 0,01 mm bis 0,03 mm liegt und die Fläche der primären Fase (133) mindestens das Fünffache der Fläche der sekundären Fase (136) beträgt.

5. Schneid- und Befestigungssystem nach einem der Ansprüche 2 bis 4, wobei eine Unterseite (1331) der primären Fase (133) eine Höhe entlang der Längsrichtung (L) aufweist, wobei die Höhe in einem Bereich von 0,73 mm bis 0,77 mm liegt, wobei das Stützsegment (12) eine zur Längsrichtung (L) parallele Mittelachse (C) definiert, und ein Abstand (D131) zwischen der ersten Seitenfläche (131) und der Mittelachse (C) kleiner ist als ein Abstand (D132) zwischen der zweiten Seitenfläche (132) und der Mittelachse (C), und wobei die zweite Seitenfläche (132) und die Querreferenzebene (P1) dazwischen einen zweiten Winkel (σ2) aufweisen, der in einem Bereich von 91 Grad bis 91,5 Grad liegt.

6. Schneid- und Befestigungssystem nach einem der Ansprüche 1 bis 5, wobei das Schneidsegment (13) integral mit dem Stützsegment (12) verbunden ist, das Schneidwerkzeug (1) ein Montagesegment (11) umfasst und das Stützsegment (12) auf das Montagesegment (11) gelötet ist.

7. Schneid- und Befestigungssystem nach einem der Ansprüche 1 bis 6, wobei die Schneidvorrichtung (100) für einen bestimmten Typ der Universalfolie (200) geeignet ist, die einen auf der Pufferebene (202) angeordneten Identifikationscode (2021) aufweist, und die Schneidvorrichtung (100) ferner einen Scanner (5) umfasst, der an der Trägermaschine (2) angebracht und elektrisch mit dem Verarbeitungsmodul (4) gekoppelt ist, wobei das Schneid- und Befestigungssystem einen Cloud-Server (300) umfasst, der elektrisch mit dem Verarbeitungsmodul (4) und dem Scanner (5) gekoppelt ist, und wobei im Betrieb, wenn die Universalfolie (200) an der Trägermaschine (2) befestigt ist, der Scanner (5) konfiguriert ist, den Identifikationscode (2021) zu scannen, um ein Signal zu erzeugen, sodass der Cloud-Server (300) konfiguriert ist, das Signal über das Verarbeitungsmodul (4) zu empfangen, um es der Schneidvorrichtung (100) zu ermöglichen, den Schneidevorgang durchzuführen.

8. Schneid- und Befestigungssystem nach einem der Ansprüche 1 bis 7, wobei das Schneid- und Befestigungssystem dazu ausgelegt ist, eine Folie (200) zu schneiden und anzubringen, und wobei die Dicke des zweiten Pufferfilms (202b) in einem Bereich von 40 % bis 90 % der Dicke des ersten Pufferfilms (202a) liegt und die Dicke des ersten Pufferfilms (202a) in einem Bereich von 60 % bis 75 % der Dicke der gehärteten Films (2031) liegt.

9. Schneid- und Befestigungssystem nach einem der Ansprüche 1 bis 8, wobei das Schneid- und Befestigungssystem dazu ausgelegt ist, eine Folie (200) zu schneiden und anzubringen, und wobei die Summe aus der Dicke des ersten Pufferfilms (202a) und der Dicke des zweiten Pufferfilms (202b) in einem Bereich von 60 % bis 105 % der Dicke des Haftfilms (2032) liegt, und die Dicke des gehärteten Films (2031) in einem Bereich von 55 % bis 90 % der Dicke des Haftfilms (2032) liegt.

10. Schneid- und Befestigungssystem nach einem der Ansprüche 1 bis 9, wobei das Stützsegment (12) eine Umfangsfläche mit kreisförmiger Gestalt aufweist, die erste Seitenfläche (131) eine ebene Seitenfläche (131) ist und die zweite Seitenfläche (132) eine gekrümmte Seitenfläche (132) ist, die bündig mit der Umfangsfläche des Stützsegments (12) abschließt.

## Revendications

1. Système de coupe et de fixation pour protecteur d'écran (200S) présentant une dureté élevée, le système comprenant :
un appareil de coupe (100) comprenant :
une machine porteuse (2) ;
un mécanisme de déplacement (3) assemblé sur la machine porteuse (2) et mobile par rapport à la machine porteuse (2) ;
un module de traitement (4) assemblé sur la machine porteuse (2), dans lequel le module de traitement (4) est couplé électriquement au mécanisme de déplacement (3) et est configuré pour déplacer le mécanisme de déplacement (3) le long d'un trajet de coupe de trou et d'un trajet de coupe d'écran qui est différent du trajet de coupe de trou, et dans lequel le trajet de coupe d'écran correspond à un contour d'un écran d'un appareil mobile (M) ; et
un dispositif de coupe (1) assemblé sur le mécanisme de déplacement (3), le dispositif de coupe (1) définissant un plan de référence transversal (P1) et un plan longitudinal perpendiculaire au plan de référence transversal (P1), le plan de référence transversal (P1) étant perpendiculaire à une direction longitudinale (L) du dispositif de coupe (1), et dans lequel le dispositif de coupe (1) comprend :
un segment de support (12) ; et
un segment de coupe (13) relié au segment de support (12), le segment de coupe (13) comportant une première surface latérale (131), une seconde surface latérale (132) correspondant à la première surface latérale (131), un biseau secondaire (136) relié à la première surface latérale (131), et un biseau principal (133) qui est relié à la seconde surface latérale (132) et au biseau secondaire (136), et dans lequel un bord de liaison du biseau principal (133) et du biseau secondaire (136) est défini comme un bord de coupe principal (13a) qui est agencé sur le plan de référence longitudinal (P2) ;
dans lequel la première surface latérale (131) et le plan de référence longitudinal (P2) présentent un angle d'inclinaison (σ 3) entre eux qui se situe dans une plage de 1 degré et 3 degrés, et le bord de coupe principal (13a) et le plan de référence transversal (P1) présentent un premier angle (σ 1) entre eux qui se situe dans une plage allant de 43 à 47 degrés, et dans lequel le bord de coupe principal (13a) présente une première hauteur (H1) le long de la direction longitudinale (L), la première hauteur (H1) se situant
dans une plage allant de 0,98 mm à 1,08 mm ; l'appareil de coupe (100) étant configuré pour couper et appliquer
une feuille (200) universelle configurée pour être coupée afin de former un protecteur d'écran (200S) au moyen d'un processus de coupe de l'appareil de coupe (100), une telle feuille (200) universelle comprenant :
une couche d'utilisation comprenant un film durci (2031) et un film de collage (2032) formé sur le film durci (2031), une dureté du film durci (2031) étant d'au moins 5H ;
une couche tampon (202) comprenant un premier film tampon (202a) fixé sur le film durci (2031) et un second film tampon (202b) fixé sur le premier film tampon (202a), une dureté du film durci (2031), une dureté du premier film tampon (202a) et une dureté du second film tampon (202b) diminuant de manière séquentielle, et une épaisseur du film durci (2031), une épaisseur du premier film tampon (202a) et une épaisseur du second film tampon (202b) diminuant de manière séquentielle ; et
une couche inférieure (201) fixée sur le film de collage (2032) ;
dans lequel lorsque, lors de l'utilisation, la feuille (200) universelle est placée sur l'appareil de coupe (100) pendant le processus de coupe, la couche inférieure (201) de la feuille universelle (200) est fixée à la machine porteuse (2), le mécanisme de déplacement (3) est entraîné par le module de traitement (4) pour permettre au bord de coupe principal (13a) du dispositif de coupe (1) de couper la couche tampon (202) et la couche d'utilisation le long du trajet de coupe de trou afin de former un contour de positionnement (S2) comportant une pluralité de trous de positionnement (2022), puis le long du trajet de coupe d'écran pour former un contour d'écran (S1) situé à l'intérieur du contour de positionnement (S2), de telle sorte que la couche tampon (202) et la couche d'utilisation définissent conjointement une région d'écran (200S1) et une région de positionnement (200S2) qui entoure la région d'écran (200S1) et qui comporte les trous de positionnement (2022) ; et
un applicateur de film (400) situé en aval de l'appareil de coupe (100) et comprenant :
une chambre de logement (401) conçue pour maintenir l'appareil mobile (M) ; et
une pluralité de colonnes de positionnement (402) agencées sur deux côtés opposés de la chambre de logement (401), où une position relative des colonnes de positionnement (402) est identique à une position relative des trous de positionnement (2022) du contour de positionnement (S2), et une position relative entre les colonnes de positionnement (402) et l'écran de l'appareil mobile (M) est identique à une position relative entre les trous de positionnement (2022) et le contour d'écran (S1) ;
dans lequel le système de coupe et de fixation est configuré de telle sorte que, lors de l'utilisation, la chambre de logement (401) de l'applicateur de film (400) maintient l'appareil mobile (M) et que les trous de positionnement (2022) de la région de positionnement (200S2) sont respectivement emmanchés au niveau des colonnes de positionnement (402), la région d'écran (200S1) est orientée vers l'écran de l'appareil mobile (M) afin de permettre à la région d'écran (200S1) d'être pressée sur l'écran.

2. Système de coupe et de fixation selon la revendication 1, dans lequel le bord de coupe principal (13a) comporte une pointe (131a) agencée à distance du segment de support (12) et une extrémité supérieure (132a) agencée de manière adjacente au segment de support (12), le biseau principal (133) comporte une face inférieure (1331) reliée à la pointe (131a) et une face supérieure (1332) qui est reliée à l'extrémité supérieure (132a), et la première surface latérale (131) et la seconde surface latérale (132) sont espacées l'une de l'autre, et dans lequel le segment de coupe (13) comporte :
une première surface d'extrémité (134) qui est reliée à la première surface latérale (131), à la seconde surface latérale (132) et à la face inférieure (1331) du biseau principal (133) de manière à former conjointement la pointe (131a) ; et
une seconde surface d'extrémité (135) qui est reliée à la première surface latérale (131), à la seconde surface latérale (132) et à la face supérieure (1332) du biseau principal (133) de manière à former conjointement l'extrémité supérieure (132a).

3. Système de coupe et de fixation selon la revendication 2, dans lequel la première surface d'extrémité (134) comporte un bord de coupe secondaire (13b) qui s'étend à partir de la pointe (131a) et qui présente une seconde hauteur (H2) dans la direction longitudinale (L), et dans lequel la seconde hauteur (H2) se situe dans une plage de 4 µm à 6 µm.

4. Système de coupe et de fixation selon l'une quelconque des revendications 1 à 3, dans lequel le biseau secondaire (136) présente une forme allongée parallèle au bord de coupe principal (13a), une largeur (W136) du biseau secondaire (136) se situe dans une plage comprise de 0,01 mm à 0,03 mm, et une surface du biseau principal (133) est au moins 5 fois supérieure à une surface du biseau secondaire (136).

5. Système de coupe et de fixation selon l'une quelconque des revendications 2 à 4, dans lequel une face inférieure (1331) du biseau principal (133) présente une hauteur le long la direction longitudinale (L), la hauteur se situant dans une plage allant de 0,73 mm à 0,77 mm, dans lequel le segment de support (12) définit un axe central (C) parallèle à la direction longitudinale (L), et une distance (D131) entre la première surface latérale (131) et l'axe central (C) est inférieure à une distance (D132) entre la seconde surface latérale (132) et l'axe central (C), et dans lequel la seconde surface latérale (132) et le plan de référence transversal (P1) présentent un second angle (σ 2) entre eux qui se situe dans une plage allant de 91 degrés à 91,5 degrés.

6. Système de coupe et de fixation selon l'une quelconque des revendications 1 à 5, dans lequel le segment de coupe (13) est relié d'un seul tenant au segment de support (12), le dispositif de coupe (1) comprend un segment d'assemblage (11), et le segment de support (12) est soudé sur le segment d'assemblage (11).

7. Système de coupe et de fixation selon l'une quelconque des revendications 1 à 6, dans lequel l'appareil de coupe (100) est adapté à un certain type de feuille (200) universelle comportant un code d'identification (2021) agencé sur la couche tampon (202), et l'appareil de découpe (100) comprend en outre un scanner (5) qui est assemblé sur la machine porteuse (2) et qui est couplé électriquement au module de traitement (4), dans lequel le système de coupe et de fixation comprend un serveur cloud (300) qui est couplé électriquement au module de traitement (4) et au scanner (5), et dans lequel, lors de l'utilisation, la feuille (200) universelle est fixée sur la machine porteuse (2), le scanner (5) est configuré pour scanner le code d'identification (2021) afin de générer un signal, de telle sorte que le serveur cloud (300) est configuré pour recevoir le signal par le biais du module de traitement (4) afin de permettre à l'appareil de coupe (100) d'effectuer le processus de coupe.

8. Système de coupe et de fixation selon l'une quelconque des revendications 1 à 7, dans lequel le système de coupe et de fixation est préparé pour couper et appliquer une feuille (200), et dans lequel l'épaisseur du second film tampon (202b) se situe dans une plage allant de 40 % à 90 % de l'épaisseur du premier film tampon (202a), et l'épaisseur du premier film tampon (202a) se situe dans une plage allant de 60 % et 75 % de l'épaisseur du film durci (2031).

9. Système de coupe et de fixation selon l'une quelconque des revendications 1 à 8, dans lequel le système de coupe et de fixation est préparé pour couper et appliquer une feuille (200), et dans lequel la somme de l'épaisseur du premier film tampon (202a) et de l'épaisseur du second film tampon (202b) se situe dans une plage allant de 60 % à 105 % d'une épaisseur du film de collage (2032), et l'épaisseur du film durci (2031) se situe dans une plage allant de 55 % à 90 % de l'épaisseur du film de collage (2032).

10. Système de coupe et de fixation selon l'une quelconque des revendications 1 à 9, dans lequel le segment de support (12) présente une surface environnante de forme circulaire, la première surface latérale (131) est une surface latérale plane (131), et la seconde surface latérale (132) est une surface latérale courbe (132) qui affleure la surface environnante du segment de support (12).
